Europäisches Patentamt

(19) European Patent Office

Office européen des brevets

(11) Veröffentlichungsnummer: **0 028 710**
**B1**

(12) # EUROPÄISCHE PATENTSCHRIFT

(45) Veröffentlichungstag der Patentschrift:
04.04.84

(21) Anmeldenummer: 80106119.3

(22) Anmeldetag: 09.10.80

(51) Int. Cl.³: **B 43 L 19/00**, C 08 J 9/30 //
(C08J9/30, C08L27/06, 9/08,
B29D27/00, B29G7/02,
B29H7/20)

(54) **Verfahren zur Herstellung geformter Radierer.**

(30) Priorität: 09.11.79 DE 2945326

(43) Veröffentlichungstag der Anmeldung:
20.05.81 Patentblatt 81/20

(45) Bekanntmachung des Hinweises auf die Patenterteilung:
04.04.84 Patentblatt 84/14

(84) Benannte Vertragsstaaten:
AT DE FR GB

(56) Entgegenhaltungen:
AT - B - 348 769
DE - B - 1 057 777
DE - C - 932 540

(73) Patentinhaber: WACKER-CHEMIE GMBH,
Prinzregentenstrasse 22, D-8000 München 22 (DE)

(72) Erfinder: Engelbrecht, Rupert, Gluckstrasse 9,
D-8263 Burghausen (DE)

## Verfahren zur Herstellung geformter Radierer

Radiermassen auf Grundlage von Kunststoffen, z. B. Polyvinylchlorid (PVC), Vinylchlorid-Vinylacetat- und Äthylen-Vinylacetat-Copolymerisaten mit Zusatz von Weichmacher, Füllstoff, viskositätssenkenden Mitteln, Wärmestabilisatoren, gegebenenfalls anderen Zusatzstoffen, wie Tuschelösern, oder auf Grundlage konventioneller Kautschukmassen, z. B. Naturkautschuk oder Synthesekautschuk gegebenenfalls mit den obengenannten Zusätzen sind bekannt. Zum Beispiel wird eine solche Radiermasse in der DE-C-932 540 beschrieben. Sie weist nur einen geringen, klebrigen bis vorzugsweise keinen Eigen-Abrieb auf. Außerdem besitzt diese bekannte Radiermasse einen relativ hohen Weichmacheranteil.

Dadurch wird beim Gebrauch die zu radierende Stelle vielfach verschmiert, anstatt daß die zu entfernende Beschriftung, Zeichnung usw. rückstandsfrei beseitigt wird. Dieser Schmiereffekt wird durch Ausschwitzen von Weichmacher noch verstärkt. Insbesondere beim Abpausen von technischen Zeichnungen wirkt sich eine derartige verschmutzte Stelle nachteilig aus. Auch rufen bekannte Radiermassen bei der Anwendung auf weniger festen Untergründen vielfach Beschädigungen hervor, insbesondere, wenn sich beim Lagern die Oberfläche des Radierers verhärtet hat.

Nachdem die verschäumten Produkte der AT-B-348 769 sich durch hohe Festigkeit auszeichneten, boten das in dieser Druckschrift beschriebene Verfahren und auch die aus der DE-B-1 057 777 bekannte Vorrichtung zur Aufschäumung von Natur- und Kunst-Kautschuk-Latices und von PVC-Plastisolen keine Lösung dieser Probleme an. Denn letztere Auslegeschrift führt als Verwendung dieser Kautschukmilch Schwammkautschuk-Webstoff-Erzeugnisse an, bei denen Radierprobleme nicht auftreten. Die obengenannten nachteiligen Effekte speziell bei Radiergummis könnten jedoch vermieden werden, wenn gewährleistet würde, daß bei der Anwendung auch nach längerer Alterung an der Luft die gealterte Schicht durch die beim Radieren auftretenden geringen Scherkräfte sofort von der Radierfläche abgetragen wird, ohne eine Verschmierung oder Scheuerflecken zu bewirken.

Aufgabe der Erfindung ist also ein Verfahren, durch das eine Masse zur Verfügung gestellt wird, die sich besonders gut zur Verwendung als Radierer eignet, ohne bei der Anwendung Scheuer- oder Schmierflecken zu hinterlassen.

Diese Aufgabe wird bei einem Verfahren zur Herstellung geformter Radierer aus Homo- und/oder Copolymermassen, die aus vinylgruppenhaltigen Verbindungen hergestellt sind, und/oder Kautschukmassen, wobei diese Massen gegebenenfalls Weichmacher, gegebenenfalls Füllstoff und gegebenenfalls weitere Zusatzstoffe enthalten, nach einer Formgebung durch Aufbringen auf einen Träger oder Einbringen in Formen durch Erhitzen gehärtet bzw. geliert, anschließend vom Träger bzw. von der Form getrennt und gegebenenfalls mechanisch in die gewünschte endgültige Form gebracht werden, dadurch gelöst, daß eine Masse aus Kautschuk und/oder aus

100 Gewichtsteilen der polymeren Grundmasse,
20 bis 120 Gewichtsteilen Weichmacher,
0 bis 30 Gewichtsteilen viskositätserniedrigenden Mitteln,
0 bis 200 Gewichtsteilen Füllstoffen,
je bis zu 5 Gewichtsteilen handelsüblichen Wärme- und Zellschaumstabilisatoren und
gegebenenfalls Lösungsmittel verwendet wird, die zunächst pastenartig ist und dann vor dem Aufbringen auf den Träger bzw. Einbringen in die Formen durch mechanisches Einbringen von Gas aufgeschäumt wird.

Die im erfindungsgemäßen Verfahren einsetzbare Masse setzt sich vorzugsweise zusammen aus 100 Gew.-Tl. der polymeren Grundmasse, 50 bis 80 Gew.-Tl. Weichmacher, 0 bis 10 Gew.-Tl. viskositätserniedrigenden Mitteln, 20 bis 100 Gew.-Tl. Füllstoffen und je bis zu 3 Gew.-Tl. handelsüblichen Wärme- und Zellschaumstabilisatoren.

Als erfindungsgemäß einsetzbare polymere Grundmasse eignen sich solche Massen, die bereits bisher als Grundmasse für Radierer verwendet wurden. Beispielhaft seien genannt: Natur- und Kunstkautschuk-Latices, z. B. aus Isopren, Butadien-Styrol-Copolymere und Acrylnitril-Butadien-Styrol-Terpolymere. Bevorzugt werden Vinylchlorid-Homopolymerisate, vorzugsweise mit K-Werten von 60 bis 80, insbesondere solche PVC-Massen, die verpastbar sind, aber auch Copolymerisate des Vinylchlorids mit anderen olefinisch ungesättigten Monomeren, wie etwa Olefinen, z. B. Äthylen, Propylen und Butylen, wie etwa Vinylhalogenverbindungen, z. B. Vinylfluorid, Vinylidenchlorid, wie etwa Vinylestern, z. B. Vinylacetat, Vinylpropionat, Vinyläthylhexanoat, Vinyllaurat, wie etwa ungesättigten Carbonsäuren, z. B. Acrylsäure, Methacrylsäure, Fumarsäure, Maleinsäure, Itakonsäure und deren Ester, sowie Acrylnitril können vorteilhaft eingesetzt werden. Solche Copolymeren enthalten vorzugsweise zu mindestens 70, insbesondere 90 Gew.-% Vinylchlorideinheiten und besitzen vorzugsweise K-Werte im obengenannten Bereich.

Die bevorzugten verpastbaren Vinylchlorid-Polymerisate können neben durch Emulsionspolymerisation hergestelltem PVC auch handelsübliche PVC-Pastenverschnittharze enthalten.

Die genannten Polymerisate werden mit Weichmachern, gegebenenfalls viskositätserniedrigenden Mitteln, gegebenenfalls Füllstoffen, gegebenenfalls Wärmestabilisatoren, gegebenenfalls Zellschaumstabilisatoren und gegebenenfalls Lösungsmittel, z. B. für Tusche zu einer weichen Masse mit vorzugsweise pastösen Eigenschaften und einer Viskosität von 1 bis 100 Pas, insbesondere 15 bis 30 Pas in üblicher Weise gemischt. Hierzu können die allgemein dafür bekannten Mischwerkzeuge, wie Mischer oder Kneter eingesetzt werden.

Als Weichmacher können in der Kunststofftechnik allgemein übliche Weichmacher oder ihre Gemische verwendet werden, z. B. Ester der Phthalsäure, der Adipinsäure, der Sebacinsäure und der Azelainsäure mit $C_1$–$C_{18}$-Alkoholen wie Methanol, Äthanol, Heptanol, Octanol, Decanol, Caprylalkohol, Benzylalkohol, Ester der Phosphorsäure oder von Alkylsulfonsäuren mit den vorstehend genannten Alkoholen, sowie mit Kresol und Phenol. Die genannten Alkohole können geradkettig, verzweigt oder cyclisch sein, z. B. wird unter Propanol sowohl das n-Propanol wie auch iso-Propanol, unter Butanol n-, sec.- und tert.-Butanol, unter Hexanol nicht nur die gerad- oder verzweigtkettigen Formen sondern auch das Cyclohexanol verstanden. Die mehrbasigen Säuren sind vorzugsweise vollständig verestert, wobei Ester der Säuren mit einem Alkohol oder mit verschiedenen Alkoholen geeignet sind. Geeignet sind auch Weichmacher vom Epoxytyp und polymere Weichmacher. Besonders bevorzugt werden solche Weichmacher, die physiologisch unbedenklich sind und z. B. amtlich zugelassen sind für den Lebensmittel- und Spielwarensektor. Diese Bevorzugung gilt auch für die übrigen Komponenten der Massen, die zur erfindungsgemäßen Herstellung der Radierer verwendet werden.

Die Viskosität der Massen kann auch durch andere Mittel gesteuert werden, die zwar die Viskosität senken aber keine Weichmachereigenschaften besitzen. Beispiele hierfür sind Weißöle und Ester längerkettiger Alkylcarbonsäuren, vorzugsweise mit 16 bis 18 Kohlenstoffatomen, mit einwertigen aliphatischen gesättigten Alkoholen, vorzugsweise mit 6 bis 12 Kohlenstoffatomen, wie Octylstearat und Decylpalmitat.

Vielfach erweist es sich als vorteilhaft, den Radiermassen, aus denen erfindungsgemäß die Radierer hergestellt werden, Füllstoffe, insbesondere solche, die schwach bis stark abrasiv wirken, oder Farbstoffe zuzusetzen.

Durch die Wahl des Füllstoffes und seine eingearbeitete Menge läßt sich auch eine Steuerung des Abriebs und der Festigkeit des erfindungsgemäß hergestellten Radierers erreichen. Als Füllstoff lassen sich alle die Füllstoffe einsetzen, die bereits in Radiermassen verwendet werden. Bevorzugte Beispiele hierfür sind: gemahlene Kreide, gemahlener Schwerspat, Bimsmehl, Glasmehl, Siliciumdioxid in der Form von gemahlenem Quarz oder feinstteiliger Kieselsäure, die hergestellt wurde in den allgemein bekannten Verfahren der Flammhydrolyse, Fällung und der Reduktion mit anschließender Reoxydation in der Glasphase, gemahlene Silikate. Es ist auch möglich, Micropellets einzubringen, die Lösungsmittel für z. B. Tusche enthalten.

Solche bekannten Lösungsmittel, die vorzugsweise bis zu 40 Gew.-Tl. in je 100 Gew.-Tl. Polymergrundmassen enthalten sein können, sind z. B. Benzol- oder Aminosulfonsäuren in Äthylenglykol oder Gemische davon mit Di- oder Triglykolen oder Mischungen dieser Polyole mit Aminen oder Ammoniumbasen oder eine mit einem mehrwertigen Alkohol oder seinem Äther veresterte Carbonsäure oder ein Äther aus einem mehrwertigen Alkohol oder dessen Äther und einem Äthylenoxyd, wobei diese Lösungsmittel meistens noch freie Hydroxylgruppen enthalten. Diese Lösungsmittel können auch in bekannter Weise in quellfähigen Substanzen aufgezogen in die erfindungsgemäß verwendete Masse eingebracht werden. Solche quellfähigen Massen sind Polyvinylalkohol, Zellulosederivate, Alginsäure, Alginate, Polysaccharide, Polyvinylpyrolidone und/oder modifizierte Bentonite.

Weiterhin werden den Massen in an sich bekannter Weise vielfach Wärmestabilisatoren zugesetzt, die dem Fachmann für die Stabilisierung der Polymergrundmassen allgemein bekannt sind. Hier seien nur beispielhaft Stabilisatoren auf Grundlage von Verbindungen der Elemente Calcium, Barium, Zinn, Cadmium, Blei, Zink, insbesondere mit organischen Fettsäuren genannt.

Darüberhinaus werden den Massen vielfach an sich bekannte Zellschaumstabilisatoren, z. B. auf Grundlage von Silikon zugesetzt.

Die vorstehend genannten Komponenten werden nach ihrem Zusammenmischen in einem für andere Verwendungen bekannten handelsüblichen Schaummischer, vorzugsweise mit gekühltem Rotor oder gekühltem Mischkopf, z. B. einem Euromatic- oder Oakes-Mischer aufgeschäumt. Auf diese Weise können gezielt verschiedene Mengen von Gas, z. B. Luft oder Stickstoff eingebracht werden. Der Schaum sollte danach vorzugsweise eine Naßdichte von etwa 0,5 bis 1,5 kg/l besitzen und je nach geplanter Weiterverarbeitung entweder frei fließen, was für das Einbringen in Formen erwünscht ist, oder eine Fließgrenze besitzen. Letzteres ist bevorzugt, wenn der Schaum mechanisch auf einen freien Träger aufgebracht werden soll.

Durch die vorstehend beschriebene Verwendung des Schaummischers beim erfindungsgemäßen Verfahren wird in überraschend einfacher Weise der Zusatz chemischer Treibmittel, wie z. B. Peroxy- und Azo-Verbindungen, vermieden, deren Rückstände die Eigenschaften der Radiermasse beeinträchtigen und außerdem physiologisch bedenklich sein können. Sie lassen auch keine hinreichend genaue Steuerung der Schaumdichte und keinen davon unabbhängigen Gelierungsgrad zu.

Die weitere Verarbeitung des Schaums kann kontinuierlich oder diskontinuierlich wahlweise erfolgen durch Einfüllen in Formen z. B. in Metallschalen oder zwischen Metallplatten oder durch Aufbringen auf ein Substrat, z. B. Trennpapier oder silikonisiertes Gewebe. Dieses Aufbringen erfolgt auf

3

üblichen Streichanlagen, z. B. mit Hilfe einer Rakelvorrichtung. Vorzugsweise wird der Schaum zu Schichten mit einer Dicke von 5 bis 20 mm, insbesondere etwa 10 mm geformt. Nach Aufbringen auf den Träger wird der Schaum in einem Trockenkanal (bei nichtgelierenden Massen) oder ein einem Gelierkanal vorzugsweise kontinuierlich, vorzugsweise bei Temperaturen von 140 bis 200° C, insbesondere von 150 bis 170° C gehärtet, vorzugsweise geliert, bis die allgemein bekannte, zum Gebrauch ausreichende, Festigkeit für Radierer erreicht ist. Die genaue Dauer dieser Wärmebehandlung sowie die geeignete Form der Wärmeeinwirkung, z. B. durch Wärmestrahler, Heißluft oder direkte Beheizung können vom Fachmann durch wenige Versuche einfach ermittelt werden. Selbstverständlich kann das vorstehend beschriebene Gelierverfahren auch diskontinuierlich durchgeführt werden. Letzteres ist bei der Formgebung durch Einfüllen in Formen allgemein üblich.

Vielfach genügt bei den genannten Schichtdicken eine Wärmebehandlung von 5 bis 10 Minuten. Diese Zeitdauer kann selbstverständlich auch unter- oder überschritten werden, z. B. wenn besonders leicht abreibende (geringerer Gelierungsgrad) oder besonders schwer abreibende (hoher Gelierungsgrad) Radierer gewünscht werden.

Durch die Wahl der Mischungskomponenten, sowie speziell des Gelierungsgrades von PVC-Massen, insbesondere jedoch erfindungsgemäß durch Steuerung des Aufschäumungsgrades lassen sich Radierer mit unterschiedlichen Gebrauchseigenschaften, z. B. hinsichtlich Härte, Eigenabrieb und Substratabrieb erzielen.

Nach dem Abkühlen wird die Radiermasse entformt oder vom Substrat getrennt, eventuell bedruckt, und kann nun durch mechanische Bearbeitung in ihre endgültige Formgröße gebracht werden, z. B. durch Schneiden oder Ablängen. Gegenüber der Aufschäumung mit Hilfe chemischer Zusatzstoffe fallen hierbei wegen der Gußformtreue der erfindungsgemäß hergestellten Masse keine oder nur geringe Abfallmengen an. Unter Gußformtreue wird hier verstanden, daß die gehärtete Masse nach dem Entformen bzw. Trennen vom Substrat praktisch die Schichtdicke aufweist, in die der Schaum beim Einbringen in die Form bzw. beim Auftragen auf das Substrat gebracht worden ist.

Das erfindungsgemäße Verfahren ergibt Produkte, die sich durch eine feine, gleichmäßige Porenbildung, eine glatte Oberfläche, die sauber bedruckt werden kann, die Möglichkeit einer unabhängigen Wahl des Aufschäumungs- und des Gelierungsgrades und große Varianzmöglichkeiten der Rezeptur zum Zusammenmischen der genannten Komponenten auszeichnen. Die Produkte zeichnen sich weiterhin aus durch eine gute Festigkeit, so daß mechanische Verarbeitung, z. B. Schneiden oder Abschälen, möglich ist, einen Abrieb der durch den Gelierungsgrad und die Zusammensetzung der Grundmasse gut steuerbar ist, guten Radiereffekt ohne Verschmieren (durch verbesserte Selbstreinigung) und, wenn gewünscht, ohne Abtragen oder Verletzung des Radiergrundes.

Die folgenden Beispiele sollen die Erfindung näher erläutern.

a) Rezeptbeispiele

Nach Mischen der Pasten betrug die Viskosität jeweils etwa 20 bis 28 Pas.

1. 100 Gew.-Tl.    durch Emulsionspolymerisation hergestelltes PVC mit einem K-Wert von 72
   70 Gew.-Tl.    Diisononylphthalat
   5 Gew.-Tl.    handelsübliche Ester einer natürlichen gesättigten $C_{16}$— $C_{18}$-Fettsäure mit einwertigen aliphatisch gesättigten $C_6$— $C_{12}$-Alkoholen (Lipinol®O)
   50 Gew.-Tl.    handelsübliche Kreide (Omya®BLR2)
   3 Gew.-Tl.    handelsüblicher Siliconschaumstabilisator (Fa. Wacker-Chemie GmbH, München)
   1 Gew.-Tl.    handelsüblicher Ca-Zn-Stabilisator (BÄROSTAB®NT23)

2. 100 Gew.-Tl.    einer verpastbaren durch Emulsionspolymerisation hergestelltes PVC mit K-Wert 68
   60 Gew.-Tl.    Dioctylphthalat
   60 Gew.-Tl.    handelsübliche Kreide
   1 Gew.-Tl.    handelsüblicher Wärmestabilisator
   3 Gew.-Tl.    Siliconschaumstabilisator

3. 100 Gew.-Tl.    Emulsions-PVC mit K-Wert 68
   55 Gew.-Tl.    Dioctylphthalat
   25 Gew.-Tl.    Benzylbutylphthalat
   1 Gew.-Tl.    handelsüblicher Wärmestabilisator
   3 Gew.-Tl.    Siliconschaumstabilisator
   2 Gew.-Tl.    hochdisperse Kieselsäure

4. 100 Gew.-Tl.    Styrol-Butadien-Latex
   0,9 Gew.-Tl.    Siliconöl

4 Gew.-Tl.    Schaumemulgator
7 Gew.-Tl.    Vernetzungsmittel
60 Gew.-Tl.   handelsübliche Kreide
1,5 Gew.-Tl.  Ammoniak (98%)

b) Das Aufschäumen der Masse erfolgte in einem Euromatic-Schaummischer mit 15 m Austragsschlauch

Drehzahl der Pumpe     20 min$^{-1}$
Drehzahl des Rotors    150 min$^{-1}$
Luftzufuhr             13 Skalenteile
Eingangs-Luftdruck     11 bar
System-Luftdruck        7 bar

Die Naßdichte des Schaums lag bei 0,75 bis 0,90 kg/l.

c) Der standfeste Schaum wurde kontinuierlich auf einer handelsüblichen Streich- und Gelieranlage (Fa. Industrie-Maschinen-Apparatebau) in 10 mm Dicke mit einer Rakel (1-mm-Fase) auf silikonbeschichtetes Trennpapier aufgetragen und anschließend bei 160°C in einem 10 m langen Heiztunnel bei einer Abzugsgeschwindigkeit von 1 bis 2 m/min teilweise geliert. Die Masse wurde abgekühlt und nach Entfernung des Trennpapieres auf eine Größe von 2 × 5 cm$^2$ zugeschnitten.

Die Radierer besaßen die für Radierer übliche Härte, zeigten guten Radiereffekt, ohne den Untergrund (Zeichenpapier) zu beschädigen und ohne die Bleistiftstriche (Bleistifthärte HB) zu verschmieren.

**Patentansprüche**

1. Verfahren zur Herstellung geformter Radierer aus Homo- und/oder Copolymermassen, die aus vinylgruppenhaltigen Verbindungen hergestellt sind, und/oder Kautschukmassen, wobei diese Massen gegebenenfalls Weichmacher, gegebenenfalls Füllstoff und gegebenenfalls weitere Zusatzstoffe enthalten, nach einer Formgebung durch Aufbringen auf einen Träger oder Einbringen in Formen durch Erhitzen gehärtet bzw. geliert, anschließend vom Träger bzw. von der Form getrennt und gegebenenfalls mechanisch in die gewünschte endgültige Form gebracht werden, dadurch gekennzeichnet, daß eine Masse aus Kautschuk und/oder aus

100 Gewichtsteilen der polymeren Grundmasse,
20 bis 120 Gewichtsteilen Weichmacher,
0 bis 30 Gewichtsteilen viskositätserniedrigenden Mitteln,
0 bis 200 Gewichtsteilen Füllstoffen,
je bis zu 5 Gewichtsteilen handelsüblichen Wärme- und Zellschaumstabilisatoren und
gegebenenfalls Lösungsmittel verwendet wird, die zunächst pastenartig ist und dann vor dem Aufbringen auf den Träger bzw. Einbringen in die Formen durch mechanisches Einbringen von Gas aufgeschäumt wird.

2. Verfahren nach Anspruch 1, dadurch gekennzeichnet, daß Homo- und/oder Copolymerisate des Vinylchlorids verwendet werden.
3. Verfahren nach Anspruch 1 oder 2, dadurch gekennzeichnet, daß die verwendete Homo- und Copolymer-Masse aus

100 Gewichtsteilen der polymeren Grundmasse,
50 bis 80 Gewichtsteilen Weichmacher,
0 bis 10 Gewichtsteilen viskositätserniedrigenden Mitteln,
20 bis 100 Gewichtsteilen Füllstoffen,
je bis 3 Gewichtsteilen handelsüblichen Wärme- und Zellschaumstabilisatoren und
bis 40 Gewichtsteilen Lösungsmittel besteht.

**Claims**

1. Process for the manufacture of shaped erasers comprising homopolymeric and/or copolymeric compositions, which are manufactured from compounds containing vinyl groups, and/or caoutchouc substances, wherein the compositions contain optionally plasticisers, optionally fillers, and optionally further additives, and wherein, after being shaped by application to a carrier or introduction into moulds, the compositions are hardened or gelled by heating, subsequently removed from the carrier or the mould, and, optionally, provided with the finally desired shape by mechanical means, characterised in that there is used a composition comprising caoutchouc and/or

100 parts by weight of the polymeric base,
from 20 to 120 parts by weight of plasticiser,
from 0 to 30 parts by weight of viscosity-reducing agents,
from 0 to 200 parts by weight of fillers,
up to 5 parts by weight each of customary heat stabilisers and cell foam stabilisers, and optionally, solvents,
the composition initially being in the form of a paste and then, prior to application to the carrier or introduction into the moulds, being foamed by mechanical introduction of gas.

2. Process according to claim 1, characterised in that homopolymers and/or copolymers of vinyl chloride are used.

3. Process according to claim 1 or 2, characterised in that the homopolymeric and copolymeric compositions used comprise

100 parts by weight of the polymeric base,
from 50 to 80 parts by weight of plasticiser,
from 0 to 10 parts by weight of viscosity-reducing agents,
from 20 to 100 parts by weight of fillers,
up to 3 parts by weight each of customary heat stabilisers and cell foam stabilisers, and
up to 40 parts by weight of solvent.

## Revendications

1. Procédé de préparation de gommes moulées à partir de compositions d'homopolymères et/ou de copolymères, qui sont préparées à partir de composés contenant des groupes vinyles et/ou à partir de compositions de caoutchouc, ces compositions contenant éventuellement des plastifiants, éventuellement de la charge et éventuellement d'autres additifs, que l'on durcit ou gélifie par chauffage après mise en forme par application sur un support ou introduction dans des moules puis que l'on sépare du support ou du moule et que l'on met éventuellement par voie mécanique sous la forme finale voulue, procédé caractérisé en ce qu'on utilise une composition de caoutchouc et/ou formée de 100 parties en poids de poids de la composition polymère de base, 20 à 120 parties en poids d'un plastifiant, 0 à 30 parties en poids d'agents d'abaissement de la viscosité, 0 à 200 parties en poids de charges, jusqu'à 5 parties en poids de chacun des stabilisants usuels à l'égard de la chaleur et de stabilisants de la mousse, et éventuellement des solvants, composition qui est tout d'abord pâteuse et que l'on fait ensuite mousser, par introduction mécanique de gaz, avant de l'appliquer sur le support ou de l'introduire dans les moules.

2. Procédé selon la revendication 1, caractérisé en ce qu'on utilise des homopolymères et/ou des copolymères du chlorure de vinyle.

3. Procédé selon la revendication 1 ou 2, caractérisé en ce que la composition d'homopolymère et/ou de copolymère que l'on utilise consiste en:

100 parties en poids de la composition polymère de base
50 à 80 parties en poids de plastifiant
0 à 10 parties en poids d'agents d'abaissement de la viscosité
20 à 100 parties en poids de charge,
jusqu'à 3 parties en poids de chaque stabilisant usuel à l'égard de la chaleur et chaque stabilisant de mousse, et
jusqu'à 40 parties en poids de solvant.